Europäisches Patentamt

European Patent Office

Office européen des brevets

(19)

(11) Publication number: **0 057 070**

**B1**

(12) **EUROPEAN PATENT SPECIFICATION**

(45) Date of publication of patent specification: **13.11.85**

(51) Int. Cl.⁴: **G 11 B 7/08,** G 11 B 7/12

(21) Application number: **82300216.7**

(22) Date of filing: **15.01.82**

(54) **Optical information reading apparatus.**

(30) Priority: **16.01.81 JP 5783/81**

(43) Date of publication of application:
**04.08.82 Bulletin 82/31**

(45) Publication of the grant of the patent:
**13.11.85 Bulletin 85/46**

(84) Designated Contracting States:
**DE FR GB NL SE**

(56) References cited:
**GB-A-2 025 110**

**JOURNAL OF AUDIO ENGINEERING SOCIETY, vol. 28, no. 6, June 1980, New York K. OKADA et al. "A New PCM Audio Disk Pickup Employing a Laser Diode", pages 429-431**

**PATENT ABSTRACTS OF JAPAN, vol. 4, no. 172; 27 November 1980 JP - A - 55 - 117745**

**PATENT ABSTRACTS OF JAPAN, vol. 3, no. 2, 13 January 1979, page 62E83 JP - A - 53 -129605**

(73) Proprietor: **SONY CORPORATION**
**7-35 Kitashinagawa 6-Chome Shinagawa-ku Tokyo 141 (JP)**

(72) Inventor: **Tsurushima, Katsuaki**
**2444-65 Ohzenji Tama-ku**
**Kawasaki-shi Kanagawa-ken (JP)**
Inventor: **Shintani, Kenji**
**3-1201, 2-35 Minamirokugo**
**Ohta-ku Tokyo (JP)**

(74) Representative: **Thomas, Christopher Hugo et al**
**D Young & Co 10 Staple Inn**
**London WC1V 7RD (GB)**

Courier Press, Leamington Spa, England.

## Description

This invention relates to optical information reading apparatus, such as optical disc players in which a light beam is directed on a disc or other record medium surface for optically reading information recorded in a track on the surface.

It is known, for example, from US patent specification no. 4 135 083 and UK patent specification no. 2 025 110 A, to provide an optical disc player with a focusing servo by which the light beam from a laser light source is correctly focused on the disc surface through an objective lens, and also with a tracking servo by which the point of impingement of the focused light beam on the disc surface is made to coincide with the track being scanned or read. Further, in the above patent specifications, for example, in Figures 7 to 10 of the US patent specification, there are disclosures of supporting the objective lens by first and second sets of springs so that the objective lens can be moved, in response to electromagnetically applied forces, both in the axial direction for correcting the focusing errors, and in a direction extending radially with respect to the track being scanned for correcting tracking errors. However, the use of a plurality of springs to support the objective lens gives rise to problems, in that the interrelationships of the resonances of the several springs have to be considered. Furthermore, the mass of the movable member which includes the objective lens is relatively large. Therefore, in order for the movable member to have the proper kinetic characteristics for responding to tracking and focusing error signals, it is necessary for either the driving current or the number of coil turns in its associated electromagnetic driving means to be relatively large.

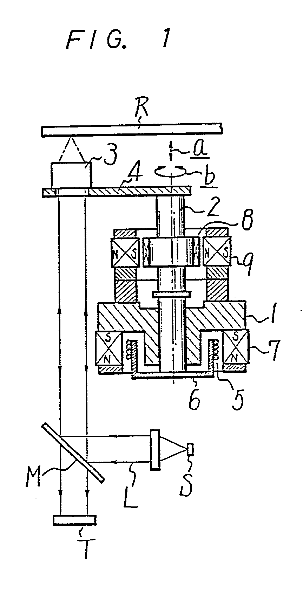

It is also known to provide an apparatus of the described type with an objective lens which is mounted for movements to correct focusing and tracking errors without resort to mounting springs for permitting such movements. One example is disclosed in the Journal of the Audio Engineering Society, June 1980, pages 429 to 431. Another example is shown diagrammatically in Figure 1 of the accompanying drawings. In the apparatus of Figure 1, a yoke plate 1 slidably supports a shaft 2 to permit both axial displacements of the shaft 2 and angular displacements about its longitudinal axis. An objective lens is supported in a mount 3 which is carried by the free end of an arm 4 extending radially from the shaft 2. A voice coil 5 is wound on a bobbin 6 secured to the lower end of the shaft 2 and intersects a magnetic field generated by a magnetic circuit which includes a yoke plate 1 and an annular magnet 7 secured thereto. When a focusing error signal is applied to the coil 5, the shaft 2 is displaced axially similarly to move the objective lens mount 3. Another coil 8 is mounted on the upper portion of the shaft 2 and cooperates with a magnetic circuit including an additional magnet 9 so that, when a tracking error signal is supplied to the coil 8, the shaft 2 is angularly displaced about its longitudinal axis correspondingly to displace the arm 4 angularly and thereby move the objective lens mount 3 in an arcuate path which is generally normal to the paper in Figure 1.

As is usual, in the apparatus of Figure 1, a laser light source S generates a light beam L reflected by a beam splitter or semi-reflecting mirror M so as to travel along a path which is normal to the surface of an optical record disc R and in which the objective lens in the mount 3 is interposed for focusing the light beam substantially at the surface of the disc R. The focused light beam, upon being reflected from the surface of the disc R is returned through the objective lens and now passes through the beam splitter M so as to impinge on a photo-sensitive detector or transducer T. The reflected light beam is modulated by an information signal recorded in a track on the surface of the disc R and which is scanned by the focused light beam, so that the output of the transducer T is similarly modulated to reproduce the recorded signal. Since the axis of the shaft 2 is normal to the surface of the disc R, axial displacements of the shaft 2, as indicated by an arrow $a$, in response to the supply of current to the coil 5, move the objective lens in the mount 3 towards and away from the record disc surface for varying the focus of the light beam L. Moreover, the direction of the arm 4 is selected to be substantially tangential with respect to substantially circular tracks in which the information signals are recorded on the surface of the disc R. Therefore, angular displacements of the shaft 2, as indicated by an arrow $b$, in response to the supply of a tracking error signal to the coil 8 cause the objective lens in the mount 3 to move substantially transversely with respect to the track being scanned for correcting a tracking error.

However, the arrangement described above with reference to Figure 1 is disadvantageous in that it is inherently large and massive, as well as being complicated to produce and assemble.

According to the present invention there is provided apparatus for directing a light beam onto a record medium surface for optically reading information recorded in a track on said surface, the apparatus comprising:

a movable assembly including a lens interposed in the path of said light beam and having a central axis parallel with the direction of the passage of said light beam through said lens, a lens support extending outwardly from said lens, first and second coil means attached to said lens support, said first coil means including substantially rectangular-shaped coils and said second coil means being circumferentially wound and having said rectangular-shaped coils in layered relation thereto, and a first bearing member fixed to said lens support with a longitudinal axis of said first bearing member offset laterally with respect to said central axis of said lens; and

a fixed assembly including a second bearing member engaging said first bearing member and guiding said first bearing member for angular displacements of said movable assembly about said longitudinal axis of said first bearing member and for slidable displacements in the direction of said longitudinal axis, and means constituting a single magnetic circuit for generating a magnetic field intersecting said first coil means except at one side of each of said rectangular-shaped coils so that said angular displacements of said movable assembly are effected in response to supply of a first driving current to said first coil means, said magnetic field also intersecting said second coil means so that said slidable displacements of said movable assembly are effected in response to supply of a second driving current to said second coil means; and wherein

said means constituting a single magnetic circuit includes a ring-shaped magnet, an outer annular yoke extending from said magnet and an inner annular yoke extending from said magnet and spaced radially inward from said outer yoke to define a gap therebetween, and one of said outer and inner yokes has a cut-out therein, an effective portion of said first coil means being disposed on said lens support in said gap, and said second coil also being disposed on said lens support in said gap.

The invention will now be described by way of example with reference to the accompanying drawings, throughout which like references designate like elements, and in which:—

Figure 1 is a diagrammatic sectional view showing parts of a previously proposed optical disc player;

Figure 2A is a top plan view of an objective lens mount and drive for an optical disc player in an embodiment of the invention; and

Figure 2B is a sectional view taken along the line X—X in Figure 2A.

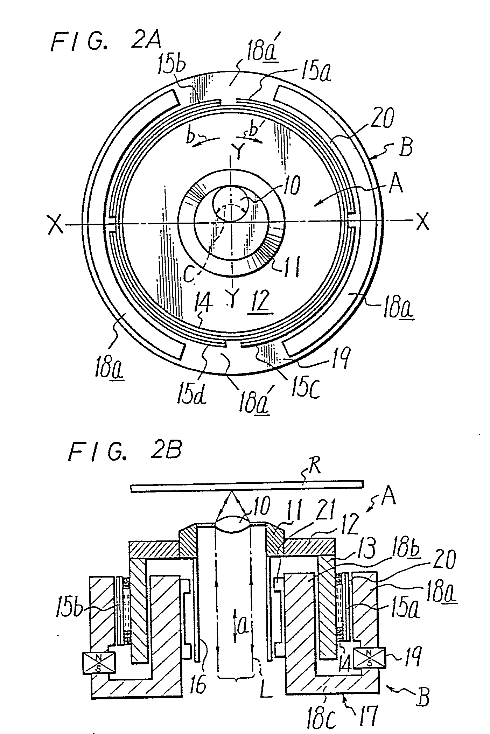

Referring now to Figures 2A and 2B, it will be seen that, in an optical disc player or like apparatus according to an embodiment of the invention in which a light beam L is directed onto a surface of a record medium such as a disc R for optically reading information recorded in a track on the surface, an objective lens 10 is interposed in the path of the light beam L with the central or optical axis of the objective lens 10 generally parallel to the direction of the passage of the light beam therethrough.

The objective lens 10 forms part of a movable assembly A in which an annular lens mount 11 is secured to the periphery of the objective lens 10 and has a radially outward directed flange 12 extending therefrom. A cylindrical bobbin 13 extends axially from the outer periphery of the flange 12. A coil 14 is wound circumferentially around the outer surface of the bobbin 13, and additional coils 15a, 15b, 15c and 15d are also suitably mounted on the bobbin 13, for example, in overlying relation to the coil 14. Each of the coils 15a to 15d is wound so as to be rectangular in shape with straight end portions extending axially on the bobbin 13 and curving top and bottom portions extending circumferentially over approximately one-quarter of the circumferential extent of the bobbin 13. The coils 15a, 15b, 15c and 15d are suitably connected to each other so that, when a signal for causing angular displacements of the movable assembly A, for example, a tracking error signal, is applied thereto from a suitable circuit (not shown), this signal causes current flows in the same direction, that is, either up or down, through the axially extending adjacent end portions of the coils 15a and 15c and of the coils 15b and 15d, respectively.

The movable assembly A is completed by a cylindrical body 16 which extends axially from the lens mount 11 coaxially with the bobbin 13 and is open ended so that the path of the light beam L can extend logitudinally through the cylindrical body 16 in passing through the objective lens 10.

The central axis of the objective lens 10 is parallel to the longitudinal axis of the cylindrical body 16 and offset laterally from the longitudinal axis, as is clearly apparent in Figure 2A. Moreover, the objective lens 10, the lens mount 11, the flange 12, the bobbin 13 with the coils 14 and 15a to 15d thereon, and the cylindrical body 16, all of which form the movable assembly A, are mounted for angular displacements, as a unit, about the longitudinal axis of the cylindrical body 16, and also for axial displacements in the direction of the longitudinal axis of the cylindrical body 16, for example, for effecting tracking error corrections and focusing error corrections, respectively, as hereinafter described in detail.

More particularly, it will be seen that a fixed assembly B of the apparatus shown in Figures 2A and 2B comprises a magnetic circuit 17 which includes an outer cylindrical or annular yoke 18a, an inner cylindrical or annular yoke 18b spaced radially inward from the outer yoke 18a, an annular yoke connection 18c extending between the lower ends of the yokes 18a and 18b, and an annular permanent magnet 19 interposed in the outer yoke 18a and polarized so as to have opposite poles at its upper and lower surfaces. As shown in Figure 2A, the outer yoke 18a has diametrically opposed cut-out portions 18'a so that there will be substantially no magnetic flux or field extending between the yokes 18a and 18b in the regions of the cut-out portions 18'a, whereas there will be substantially uniform magnetic flux otherwise extending across an upwardly opening gap 20 between the remaining portions of the outer yoke 18a and the inner yoke 18b.

The fixed assembly B is completed by a bearing 21 arranged inside the inner yoke 18b and arranged slidably to extend around the cylindrical body 16 of the movable assembly A so as to guide it for longitudinal displacements in the direction of the longitudinal axis with respect to the fixed assembly B, while the bobbin 13 with the coils 14 and 15a to 15d thereon extends axially from above into the gap 20.

As will be noted in Figure 2A, the movable assembly A is disposed so that the axially extending, adjacent end portions of the coils 15a and 15b and the axially extending adjacent end portions of the coils 15a and 15d will be disposed in the regions of the cut-out portions 18'a in the outer yoke 18a, that is, in the regions where there is a substantial lack of a magnetic field due to the permanent magnet 19. Thus, when a current is supplied to the coils 15a to 15d so as to cause flow through the adjacent end portions of the coils 15a and 15c and through the adjacent end portions of the coils 15b and 15d in one axial direction, for example, upwardly, such current flow interacts with the magnetic flux extending between the yokes 18a and 18b to cause angular displacement of the movable assembly A relative to the fixed assembly B about the longitudinal axis of the cylindrical body 16, for example, in the direction of an arrow b in Figure 2A. Since the adjacent end portions of the coils 15a and 15b and the adjacent end portions of the coils 15c and 15d are located in the regions of the cut-outs 18'a, and thus are not intersected by a magnetic field, the current flows through the last-mentioned adjacent ends of the coils 15a and 15b and of the coils 15c and 15d do not give rise to forces resisting the angular displacement in the direction of the arrow b. On the other hand, when the current supply to the coils 15a to 15d causes current flow through the adjacent end portions of the coils 15a and 15c and through the adjacent end portions of the coils 15b and 15d axially in the downward direction, the interaction of such current flows with the magnetic field across the gap 20 results in angular displacement of the movable assembly A in the opposite direction, for example, in the direction of an arrow b' in Figure 2A.

Since the central or optical axis of the objective lens 10 is offset from the longitudinal axis of the bobbin 13 and the cylindrical body 16, the angular displacements of the movable assembly A relative to the fixed assembly B are effective to move the optical or central axis of the objective lens 10 in the directions indicated by a double-head arrow c shown in broken lines in Figure 2A. Thus, if the direction in which the central or optical axis of the objective lens 10 is offset from the longitudinal axis of the cylindrical body 16 and the bobbin 13 is arranged to be substantially tangential to the track being scanned on the disc R, then the displacements of the central or optical axis of the objective lens 10 in the directions indicated by the arrow c and resulting from angular displacements of the movable assembly A will be substantially in the radial direction of the disc R, that is, transversely with respect to a track being scanned. Accordingly, if a tracking error signal is supplied to the coils 15a, 15b, 15c and 15d in correspondence to a deviation of the point of impingement of the light beam L on the disc R from a desired track being scanned, the resulting angular displacement of the movable assembly A, and the corresponding displacement of the objective lens 10 substantially in the radial direction of the disc R can return the point of impingement of the light beam L to the track being scanned so that a tracking servo is realized.

Although focus of the movements of the central or optical axis of the objective lens 10 is arcuate, as indicated by the arrow c, the distances through which the axis of the objective lens for correcting tracking errors are small, so that the consequent movements of the axis of the objective lens 10 in the direction of the axis Y—Y in Figure 2A are insignificant. Therefore, the time base errors that would result from displacements of the axis of the objective lens 10 in the direction of the axis Y—Y can be neglected.

It will also be seen that, in the described apparatus, the supplying of a current to the coil 14 causes the movable assembly A to be displaced in the direction of the longitudinal axis of the cylindrical body 16, as indicated by a double-headed arrow a in Figure 2B, in dependence on the magnitude and direction of the current supplied to the coil 14. Thus, a focusing error signal may be suitably supplied to the coil 14 in response to deviation of the light beam L from a sharply focused condition at the surface of the disc R, whereupon the resulting displacement of the movable assembly A in the direction either towards or away from the disc R will restore the sharply focused condition.

It will be apparent from the foregoing, that the described apparatus can be employed for simultaneously correcting both focusing and tracking errors. In such apparatus, the coils 14 and 15a to 15d for effecting the displacements of the objective lens 10 in the directions required for focusing correction and for tracking correction, respectively, are mounted on the same bobbin 13 and are influenced by the same magnetic field resulting from the single permanent magnet 19. Thus, the apparatus is relatively simple and can be completely arranged.

**Claims**

1. Apparatus for directing a light beam (L) onto a record medium surface for optically reading information recorded in a track on said surface, the apparatus comprising:
a movable assembly (A) including a lens (10) interposed in the path of said light beam (L) and having a central axis parallel with the direction of the passage of said light beam (L) through said lens (10), a lens support (11, 12, 13) extending outwardly from said lens (10), first and second coil means (14, 15a, 15b, 15c, 15d) attached to said lens support (11, 12, 13), said first coil means (15a, 15b, 15c, 15d) including substantially rectangular-shaped coils and said second coil means (14) being circumferentially wound and having said rectangular-shaped coils (15a, 15b, 15c, 15d) in layered relation thereto, and a first bearing member (16) fixed to said lens support (11, 12, 13) with a longitudinal axis of said first bearing member (16) offset laterally with respect to said central axis of said lens (10); and
a fixed assembly (B) including a second bearing member (21) engaging said first bearing member (16) and guiding said first bearing member (16) for angular displacements of said movable assembly (A) about said longitudinal axis of said first bearing member (16) and for slidable displacements in the direction of said longitudinal axis, and means (18a, 18b, 18c, 19) constituting a single magnetic circuit for generating a magnetic field intersecting said first coil means (15a, 15b, 15c, 15d) except at one side of each of said rectangular-shaped coils (15a, 15b, 15c, 15d) so that said angular displacements of said movable assembly (A) are effected in response to supply of a first driving current to said first coil means (15a, 15b, 15c, 15d), said magnetic field also intersecting said second coil means (14) so that said slidable displacements of said movable assembly (A) are effected in response to supply of a second driving current to said second soil means (14); and wherein

said means (18a, 18b, 18c, 19) constituting a single magnetic circuit includes a ring-shaped magnet (19), an outer annular yoke (18a) extending from said magnet (19) and an inner annular yoke (18b) extending from said magnet (19) and spaced radially inward from said outer yoke (18a) to define a gap (20) therebetween, and one of said outer and inner yokes (18a, 18b) has a cut-out (18'a) therein, an effective portion of said first coil means (15a, 15b, 15c, 15d) being disposed on said lens support (11, 12, 13) in said gap (20), and said second coil means (14) also being disposed on said lens support (11, 12, 13) in said gap (20).

2. Apparatus according to claim 1 wherein said second bearing member (21) is disposed against an inner surface of said inner annular yoke (18b).

3. Apparatus according to claim 2 wherein said gap (20) opens axially at one end, and said lens support (11, 12, 13) includes a cylindrical bobbin (13) extending axially into said gap (20) at said one end and having said first and second coil means (14, 15a, 15b, 15c, 15d) mounted thereon.

4. Apparatus according to claim 3 wherein said cut-out (18'a) includes diametrically opposed portions, and said first coil means (15a, 15b, 15c, 15d) has end portions of said rectangular-shaped coils (15a, 15b, 15c, 15d) extending axially with respect to said bobbin (13) and with one of said end portions of each coil (15a, 15b, 15c, 15d) adjacent to a respective one of said cut-outs (18'a).

5. Apparatus according to claim 4 wherein said ring-shaped magnet (19) has opposite poles facing axially in opposite directions.

6. Apparatus according to any one of the preceding claims wherein said record medium is in the form of a disc (R) which is rotated about the centre thereof, said track is substantially circular and concentric with said disc (R), said lens (10) has said centre axis thereof substantially normal to said surface so that said displacements in the direction of said longitudinal axis vary the focus of said light beam (L) at said surface, and said offset is in a direction tangential to said circular track so that said angular displacements are effective to vary the point of impingement of said light beam (L) on said surface substantially in the direction transverse to said track.

## Revendications

1. Appareil destiné à diriger un faisceau lumineux (L) sur une surface de support d'enregistrement pour lire optiquement des informations enregistrées dans une piste sur ladite surface, l'appareil comportant: un ensemble mobile (A) comprenant un objectif (10) intercalé dans le trajet dudit faisceau limineux (L) et ayant un axe central parallèle à la direction de passage dudit faisceau lumineux (L) par ledit objectif (10), un support d'objectif (11, 12, 13) dirigé vers l'extérieur dudit objectif (10), un premier et un second enroulements (14, 15a, 15b, 15c, 15d) fixés sur ledit support d'objectif (11, 12, 13), ledit premier enroulement (15a, 15b, 15c, 15d) comprenant des bobines de forme pratiquement rectangulaire et ledit second enroulement (14) étant bobiné circonférentiellement et en relation de superposition avec lesdites bobines rectangulaires (15a, 15b, 15c, 15d), et une première pièce support (16) fixée sur ledit support d'objectif (11, 12, 13) avec son axe longitudinal décalé latéralement par rapport audit axe central dudit objectif (10); et un ensemble fixe (B) comprenant une seconde pièce support (21) engageant ladite première pièce support (16) et la guidant pour les déplacements angulaires dudit ensemble mobile (A) autour dudit axe longitudinal de ladite première pièce support (16) et pour des déplacements coulissants dans la direction dudit axe longitudinal, et un dispositif (18a, 18b, 13c, 19) constituant un seul circuit magnétique qui développe un champ magnétique coupant ledit premier enroulement (15a, 15b, 15c, 15d) à l'exception d'un côté de chacune desdites bobines rectangulaires (15a, 15b, 15c, 15d) de manière que lesdits déplacements angulaires dudit ensemble mobile (A) soient effectués en réponse à l'application d'un premier courant d'attaque audit premier enroulement (15a, 15b, 15c, 15d), ledit champ magnétique coupant également ledit second enroulement (14) de manière que lesdits déplacements coulissants dudit ensemble mobile (A) soient effectués en réponse à l'application d'un second courant d'attaque audit second enroulement (14); et dans lequel ledit dispositif (18a, 18b, 18c, 19) constituant un seul circuit magnétique comporte un aimant annulaire (19), une culasse extérieure annulaire (18a) disposée à partir dudit aimant (19) et une culasse intérieure annulaire (18b) disposée à partir dudit aimant (19) et espacées radialement vers l'intérieur de ladite culasse extrérieure (18a) pour définir entre elles un entrefer (20) et l'une de ladite culasse extérieure et de ladite culasse intérieure (18a, 18b) comportant une partie coupée (18'a), une partie effective dudit premier enroulement (15a, 15b, 15c, 15d) étant disposée sur ledit support d'objectif (11, 12, 13) dans ledit entrefer (20) et ledit second enroulement (14) étant également disposé sur ledit support d'objectif (11, 12, 13) dans ledit entrefer (20).

2. Appareil selon la revendication 1, dans lequel ladite seconde pièce support (21) est disposée contre une surface intérieure de ladite culasse annulaire intérieure (18b).

3. Appareil selon la revendication 2, dans lequel ledit entrefer (20) est ouvert axialement à une extrémité et ledit support d'objectif (11, 12, 13) comporte une carcasse de bobine cylindrique (13) disposée axialement dans ledit entrefer (20) à ladite extrémité et sur laquelle sont montés ledit premier et ledit second enroulement (14, 15a, 15b, 15c, 15d).

4. Appareil selon la revendication 3, dans lequel ladite partie coupée (18'a) comporte des parties opposées diamétralement et ledit premier enroulement (15a, 15b, 15c, 15d) comporte des parties d'extrémité desdites bobines rectangulaires (15a, 15b, 15c, 15d) disposées axialement par rapport à ladite carcasse (13) et avec l'une desdites parties d'extrémité de chaque bobine (15a, 15b, 15c, 15d) voisines de l'une respective desdites parties coupées (10'a).

5. Appareil selon la revendication 4, caractérisé en ce que ledit aimant annulaire (19) comporte des pôles opposés faisant face axialement dans des directions opposées.

6. Appareil selon l'une quelconque des revendications précédentes dans lequel ledit support d'enregistrement se présente sous la forme d'un disque (R) qui est mis en rotation autour de son centre, ladite piste étant pratiquement circulaire et concentrique avec ledit disque (R), l'axe central dudit objectif (10) étant pratiquement perpendiculaire à ladite surface de manière que lesdits déplacements dans la direction dudit axe longitudinal fassent varier la focalisation dudit faisceau lumineux (L) dans ladite surface et ledit décalage étant tangentiel à ladite piste circulaire de manière que lesdits déplacements angulaires aient pour effet de varier le point d'impact dudit faisceau lumineux (L) sur ladite surface, dans une direction pratiquement perpendiculaire à ladite piste.

**Pantentansprüche**

1. Gerät zum Richten eines Lichtstrahls (L) auf die Oberfläche eines Aufzeichnungsmediums zum optischen Abtasten von Informationen, die in einer Spur auf der Oberfläche aufgezeichnet sind, mit

einem beweglichen Aufbau (A), der eine Linse (10), welche in den Pfad des Lichtstrahls (L) eingefügt ist und eine zentrale Achse hat, die parallel zu der Richtung des Durchgangs des Lichtstrahls (L) durch die Linse (10) liegt, einen Linsenträger (11, 12, 13) der sich nach außen von der Linse (10) aus erstreckt, erste und zweite Spulen (14, 15a, 15b, 15c, 15d), die dem Linsenträger (11, 12, 13) zugeordnet sind, wobei die ersten Spulen (15a, 15b, 15c, 15d) im wesentlichen rechteckförmige Spulen sind und die zweite Spule (14) umfangskreisförmig gewickelt ist und die rechteckförmigen Spulen (15a, 15b, 15c, 15d) als Lagen auf sich trägt, sowie ein erstes Lagerteil (16), das an dem Linsenträger (11, 12, 13) befestigt ist, wobei eine Längsachse des ersten Lagerteils (16) seitlich in bezug auf die zentrale Achse der Linse (10) versetzt ist, enthält, und

einem feststehenden Aufbau (B), der ein zweites Lagerteil (21), das in das erste Lagerteil (16) eingreift und das erste Lagerteil (16) zum Zwecke winkelmäßiger Verlagerungen des beweglichen Aufbaus (A) um die Längsachse des ersten Lagerteils (16) und zum Zwecke verschiebender Verlagerungen in der Richtung der Längsachse führt, und ein Teil (18a, 18b, 18c, 19) enthält, das einen einzigen magnetischen Kreis zum Erzeugen eines magnetischen Feldes bildet, das die ersten Spulen (15a, 15b, 15c, 15d) ausgenommen auf einer Seite jeder der rechteckförmigen Spulen (15a, 15b, 15c, 15d) durchschneidet, so daß die winkelmäßigen Verlagerungen des beweglichen Aufbaus (A) als Reaktion auf das Zuführen eines ersten Treiberstroms zu den ersten Spulen (15a, 15b, 15c, 15d) bewirkt werden, welches magnetische Feld außerdem die zweite Spule (14) durchschneidet, so daß die verschiebenden Verlagerungen des beweglichen Aufbaus (A) als Reaktion auf das Zuführen eines zweiten Treiberstroms zu der zweiten Spule (14) bewirkt werden, wobei das Teil (18a, 18b, 18c, 19), das einen einzigen magnetischen Kreis bildet, einen ringförmigen Magneten (19), ein äußeres ringförmiges Joch (18a), das sich von dem Magneten (19) aus erstreckt, und ein inneres ringförmiges Joch (18b), das sich von dem Magneten (19) aus erstreckt und in radialer richtung von dem äußeren Joch (18a) einen Abstand aufweist, um einen Spalt (20) zwischen diesen zu bilden, enthält und wobei eines von dem äußeren und dem inneren Joch (18a, 18b) eine Aussparung (18'a) in sich aufweist, wobei ein wirksamer Abschnitt der ersten Spulen (15a, 15b, 15c, 15d) auf dem Linsenträger (11, 12, 13) in dem Spalt (20) angeordnet ist und die zweite Spule (14) ebenfalls auf dem Linsenträger (11, 12, 13) in dem Spalt (20) angeordnet ist.

2. Gerät nach Anspruch 2, in dem das zweite Lagerteil (21) auf einer inneren Oberfläche des inneren ringförmigen Jochs (18b) angeordnet ist.

3. Gerät nach Anspruch 2, in dem sich der Spalt (20) in axialer Richtung an einem Ende öffnet und der Linsenträger (11, 12, 13) einen zylindrischen Spulenkörper (13) enthält, der sich in axialer Richtung in den Spalt (20) hinein an dem einen Ende erstreckt und auf dem die ersten Spulen und die zweite Spule (14, 15a, 15b, 15c, 15d) montiert sind.

4. Gerät nach Anspruch 3, in dem die Aussparung (18'a) sich diametral gegenüberstehende Abschnitt enthält und die ersten Spulen (15a, 15b, 15c, 15d) Endabschnitte der rechteckförmigen Spulen (15a, 15b, 15c, 15d) haben, die sich in axialer Richtung in bezug auf den Spulenkörper (13) erstrecken, wobei einer der Endabshcnitte jeder der Spulen (15a, 15b, 15c, 15d) einer betreffenden der Aussparungen 18'a) benachbart ist.

5. Gerät nach Anspruch 4, in dem der ringförmige Magnet (19) ungleichnamige Pole hat, die sich in entgegengesetzten axialen Richtungen gegenüberstehen.

6. Gerät nach einem der vorhergehenden Ansprüche, in dem das Aufzeichnungsmedium die Form einer Scheibe (R) hat, die um deren Mittelpunkt gedreht wird, die Spur im wesentlichen kreisförmig und konzentrisch mit der Scheibe (R) ausgebildet ist, die Linse (10) ein Zentralachse hat, die im wesentlichen senkrecht zu der Oberfläche liegt, so daß die Verlagerungen in der Richtung der längsachse den Fokus des Lichtstrahls (L) auf der Oberfläche verändern, und der Versatz in einer Richtung tangential zu der kreisförmigen Spur besteht, so daß die Winkelmäßigen Verlagerungen wirksam sind, um den Punkt des Auftreffens des Lichtstrahls (L) auf der Oberfläche im wesentlichen in der Richtung quer zu der Spur zu verändern.

FIG. 1

FIG. 2A

FIG. 2B

2